Europäisches Patentamt

European Patent Office

Office européen des brevets

(19)

(11) Publication number: **0 596 141 A1**

# EUROPEAN PATENT APPLICATION
## published in accordance with Art. 158(3) EPC

(12)

(21) Application number: 93911992.1

(22) Date of filing: **11.05.93**

(86) International application number:
**PCT/JP93/00618**

(87) International publication number:
**WO 93/24875 (09.12.93 93/29)**

(51) Int. Cl.⁵: **G05D 3/12**

(30) Priority: **22.05.92 JP 154085/92**

(43) Date of publication of application:
**11.05.94 Bulletin 94/19**

(84) Designated Contracting States:
**DE IT**

(71) Applicant: **FANUC LTD.**
**3580, Shibokusa Aza-Komanba, Oshino-mura**
**Minamitsuru-gun, Yamanashi 401-05(JP)**

(72) Inventor: **IWASHITA, Yasusuke, Fanuc Dai-3**
**Vira-karamatsu**
**3527-1, Shibokusa,**
**Oshino-mura**
**Minamitsuru-gun, Yamanashi 401-05(JP)**

(74) Representative: **Billington, Lawrence Emlyn et al**
**HASELTINE LAKE & CO**
**Hazlitt House**
**28 Southampton Buildings**
**Chancery Lane**
**London WC2A 1AT (GB)**

(54) **CONTROL METHOD FOR SERVOMOTOR.**

(57) This method is to reduce the positional errors by compensating for the delay in the rising torque of servo systems when the change in acceleration by an instruction is great. This control method comprises the steps of pre-smoothing (7) for each loop processing cycle of the position and speed; calculating the feed forward amount FFp on the basis of the pre-smoothed data SMD; and controlling the feed forward by adding the feed forward amount FFp to the speed instruction obtained by the positional loop. In the step of obtaining the feed forward amount FFp, the feed forward amount is calculated by advancing it temporally if the change in acceleration by the instruction is great, hence compensating for the delay in the rising torque.

Fig. 1

MACHINE POSITION

VELOCITY

MCMD

2

Technical Field

The present invention relates to a method of controlling a servomotor for driving a feed shaft of a machine tool or an arm of a robot, and more particularly, to a feedforward control method for a servomotor.

Background Art

When controlling the feed shaft of a machine tool or the arm of a robot by using a servomotor, particularly when carrying out high-speed cutting with a machine tool, for example, shaping error is liable to occur due to follow-up delay of the servo system. Therefore, feedforward control is executed in a position loop in order to reduce the position deviation and thereby correct the servo delay.

In the feedforward control, a move command is differentiated in each position-velocity processing cycle, the product of the differential thus obtained and a feedforward coefficient is added for correction to a velocity command obtained by a normal position loop processing, and velocity loop processing is carried out based on the thus-corrected velocity command.

Typically, the distribution cycle (ITP cycle) in which the move command is transferred from a numerical control device to a servo circuit side, i.e., the position loop, is about 8 msec, and the cycle of the position and velocity loops executed in the servo circuit is 2 msec or 1 msec. In the position loop, the ITP cycle, in which the move command is transferred from the numerical control device, is divided into position loop cycles, and the move command is controlled so that move commands for the individual position loop cycles are equal. Thus, even if an acceleration/deceleration time constant is applied to the move command output from the numerical control device, a large stepwise change occurs between the move command for the last position loop processing cycle of one ITP period and the move command for the first position loop processing cycle of the subsequent ITP period, and such change is amplified due to differentiation by a feedforward term, because, in the position loop, move commands for the individual position-velocity loop processing cycles of each ITP period are made equal. Consequently, the velocity command contains a high-frequency component and cannot be followed up in the velocity loop, with the result that the position deviation undergoes wavy variation, causing a large shock in the operation of a motor or machine.

To solve the above problem, the inventors of the present application have proposed in International Patent Application PCT/JP90/00380, which has been published as International Publication WO90/11562, a servomotor control method wherein acceleration/deceleration processing is included in the feedforward term of both the position control and velocity control, and smoothing processing is carried out to eliminate the aforementioned wavy variation.

The inventors made further researches to improve the aforementioned smoothing processing, in which past data are averaged, and developed a control method wherein pre-smoothing processing is carried out using a move command to be outputted after (later in time) the present ITP cycle in order to average the move commands for position-velocity loop cycles before and after the present cycle, and the value obtained by the pre-smoothing processing is added, as a feedforward quantity, to the velocity command obtained by the normal position loop processing (International Patent Applications PCT/JP91/01537, PCT/JP92/00666 and PCT/JP92/01150 which have been published as International Publications WO92/09022, WO92/21075 and WO93/05455, respectively).

In this pre-smoothing processing, the calculation by equation (1) below is performed to obtain a mean value m of move commands, and a position feedforward quantity is obtained by multiplying the mean value m by a feedforward coefficient $\alpha$.

$$m = Z^d(1 + Z^{-1} + ... + Z^{-(N-1)}) \bullet (\text{move command quantity})/N \qquad (1)$$

where N represents the value obtained by dividing the ITP cycle by the position-velocity loop cycle, and $Z^{-1}$ the delay of one position-velocity loop cycle. $Z^d$ is a lead module, and its lead quantity d is set to about 1/2 of N. Specifically, when N = 8, d is set to "3" or "4", and when N = 4, d is set to "1" or "2".

In PCT/JP92/00666 and PCT/JP92/01150 is also proposed a pre-smoothing processing in which the move command for the present ITP cycle and the move commands for ITP cycles before and after the present ITP cycle are used to acquire smoothing data equivalent to that obtained by equation (1) above.

Even if feedforward control involving the pre-smoothing processing as described above is executed, position error is likely to occur due to delay in the rise of torque of the servomotor when the commands require a large change of acceleration. Such acceleration change based on commands can be reckoned as a change in difference of move commands between ITP cycles. That is, the move command for each ITP cycle is a move command assigned to a predetermined constant time period (ITP cycle), and thus

EP 0 596 141 A1

represents velocity. Thus, the difference in move command between ITP cycles indicates acceleration, and so the change in the difference of move commands indicates change of commanded acceleration.

Disclosure of the Invention

An object of the present invention is to compensate for a delay in the rise of torque of a servo system, which delay is liable to occur when an acceleration change as commanded is large, thereby reducing error of actual travel path.

A servomotor control method according to the present invention comprises a step of obtaining a velocity command by carrying out a position loop processing based on a move command distributed from a numerical control device in each distribution cycle and a position feedback quantity; a step of detecting the magnitude of a commanded acceleration change based on the quantity of change of move commands associated respectively with a present distribution cycle and distribution cycles before and after the present distribution cycle; a step of determining whether the magnitude of commanded acceleration change is greater than or equal to a predetermined threshold; a step of calculating a position feedforward quantity based on the move commands for the present distribution cycle and the distribution cycles before and after the present distribution cycle, the step including advancing the calculation of the position feedforward quantity by a predetermined time period from a time at which the position feedforward quantity is calculated in the case where the magnitude of commanded acceleration change is smaller than the predetermined threshold, when the magnitude of commanded acceleration change is greater than or equal to the predetermined threshold; and a step of adding the calculated position feedforward quantity to the velocity command obtained by the position loop processing to thereby correct the velocity command.

According to one aspect of the present invention, the step of calculating the feedforward quantity further includes a step of obtaining smoothing data associated with each position loop processing cycle by carrying out a pre-smoothing processing; a step of obtaining a position feedforward quantity FFp according to the following equation (2):

$$FFp = \alpha\{k \cdot SMD0 + (1 - k)SMD1\} \qquad (2)$$

where SMD0 represents the smoothing data of a present position loop processing cycle, SMD1 the smoothing data of a position loop processing cycle immediately preceding the present position loop processing cycle, $\alpha$ a feedforward coefficient, and k a parameter; and a step of setting the value of the parameter k to k1 when the magnitude of acceleration change is smaller than the predetermined threshold, and to k2, which is greater than k1 by a predetermined time period, when the magnitude of acceleration change is greater than or equal to the predetermined threshold.

According to another aspect of the present invention, the position feedforward quantity FFp can alternatively be obtained according to equation (3) given below. In this case, the value of the parameter k is set to k1 when the magnitude of acceleration change is smaller than the predetermined threshold, and is set to k3, which is smaller than k1 by a predetermined amount, corresponding to a set time period, when the magnitude of acceleration change is greater than or equal to the predetermined threshold.

$$FFp = \alpha\{(1 - k) \cdot SMD0 + k \cdot SMD1\} \qquad (3)$$

By calculating the feedforward quantity in the above manner, it is possible to advance compensation of the velocity command by a time period corresponding to the delay of the servo system, whereby response to commands is improved, and error of travel path is reduced.

Brief Description of the Drawings

FIG. 1 is a block diagram of a servo system for carrying out feedforward control according to the present invention;
FIG. 2 is a block diagram of a servomotor control device for carrying out a method according to the present invention;
FIG. 3 is a flowchart of a processing executed in each ITP cycle by a processor of a digital servo circuit, shown in FIG. 2;
FIG. 4 is a flowchart of a processing executed by the processor of the digital servo circuit of FIG. 2 in each position-velocity loop processing cycle;
FIG. 5 is a diagram illustrating a processing for obtaining smoothing data from move commands;

4

FIG. 6 is a diagram illustrating a processing for calculating a feedforward quantity;

FIG. 7 is a diagram showing a cutting path obtained at a changeover from straight-line machining to circular machining when a conventional feedforward control method is executed; and

FIG. 8 is a diagram showing a cutting path obtained at a changeover from straight-line machining to circular machining when the feedforward control method according to the present invention is executed.

Best Mode of Carrying Out the Invention

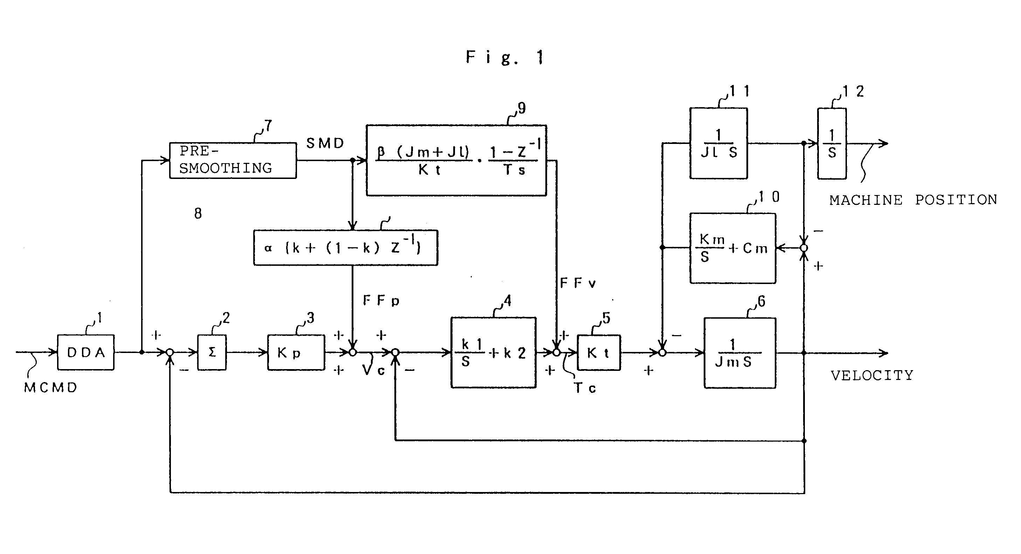

Referring to FIG. 1, a DDA (digital differential analyzer) 1 divides a move command Mcmd, which is supplied from a CNC (computerized numerical control) device in every distribution cycle (ITP cycle), into move commands assigned to respective position-velocity loop processing cycles. An error counter 2 adds up the move commands supplied from the DDA 1 and subtracts the amount of travel of a servomotor in each position-velocity loop processing cycle from the sum to obtain a position deviation. Reference numeral 3 denotes a term for obtaining a velocity command by multiplying the position deviation, stored in the error counter 2, by a position gain Kp. Reference numeral 4 denotes a term of velocity loop, wherein k1 is an integral constant, and k2 a proportional constant. Reference numerals 5 and 6 denote terms of the transfer function of the servomotor, wherein Kt is a torque constant, Jm a motor inertia. 10 and 11 denote terms of the transfer function of a machine coupled to the servomotor, wherein Km is a spring constant, Cm a viscosity term, and JL a machine inertia. Reference numeral 12 denotes a term of transfer function for converting velocity into position.

Reference numeral 7 denotes the term of a pre-smoothing processing, and 8 a term for acquiring a position feedforward quantity FFp from pre-smoothing data SMD obtained by the pre-smoothing processing, wherein k is a parameter which is adjusted in accordance with the characteristics of the machine coupled to the servomotor and change in acceleration, as is mentioned later, and $\alpha$ is a position feedforward coefficient. Reference numeral 9 denotes a term for obtaining a velocity feedforward quantity FFv by differentiating the pre-smoothing data SMD, i.e., by using the smoothing data of the present cycle and the smoothing data of the cycle immediately preceding the present cycle. Symbol Ts represents the cycle of the position and velocity loop.

The move command Mcmd is output from the numerical control device such as the CNC device in each ITP cycle, and the DDA 1 obtains a move command for each of the position-velocity loop processing cycles Ts. The error counter 2 obtains a position deviation based on the move commands and the position feedback quantity, and a velocity command Vc1 is obtained by multiplying the position deviation by the position gain Kp. The pre-smoothing means 7 acquires pre-smoothing data SMD by carrying out the processing according to the above equation (1) or based on the move command Mcmd of the present ITP cycle and the move commands Mcmd of the ITP cycles before and after the present ITP cycle.

Based on the pre-smoothing data SMD, the position feedforward quantity FFp is calculated according to equation (4) below when a change of acceleration as commanded is smaller than a threshold A; when the acceleration change as commanded is greater than or equal to the threshold A, the position feedforward quantity FFp is calculated according to equation (5) for a predetermined period of time (processing of the term 8).

When the commanded acceleration change is small,

$$\mathrm{FFp} = \alpha\{\mathrm{ka} + (1 - \mathrm{ka})Z^{-1}\} \cdot \mathrm{SMD}$$
$$= \alpha\{\mathrm{ka} \cdot \mathrm{SMD0} + (1 - \mathrm{ka}) \cdot \mathrm{SMD1}\} \qquad \ldots (4)$$

When the commanded acceleration change is large,

$$\mathrm{FFp} = \alpha\{(\mathrm{ka} + \mathrm{kb}) + (1 - \mathrm{ka} - \mathrm{kb})Z^{-1}\} \cdot \mathrm{SMD}$$
$$= \alpha\{(\mathrm{ka} + \mathrm{kb})\mathrm{SMD0} + (1 - \mathrm{ka} - \mathrm{kb})\mathrm{SMD1}\} \ldots (5)$$

SMD0 represents the pre-smoothing data calculated in the present position-velocity loop processing cycle, while SMD1 represents the pre-smoothing data calculated in the position-velocity loop processing cycle immediately preceding the present cycle. When the commanded acceleration change is greater than or equal to the threshold A, the feedforward quantity FFp is increased by the product of kb and the pre-

smoothing data SMD0 of the present cycle, and is decreased by the product of kb and the pre-smoothing data SMD1 calculated in the preceding cycle Ts, comparing with the case where the commanded acceleration change is smaller than the threshold A, and hence the feedforward quantity FFp is advanced by a predetermined time corresponding to kb.

Then, the velocity command Vc1, obtained by the aforementioned position loop processing, is added to the position feedforward quantity FFp, to obtain a velocity command Vc by which the position feedforward control has been effected. A velocity feedback quantity from the servomotor is subtracted from the velocity command Vc to obtain a velocity deviation, and a velocity loop processing similar to conventional one is carried out to obtain a torque command Tc1. Further, the value obtained by differentiating the pre-smoothing data SMD (i.e., the differential obtained by subtracting the pre-smoothing data of the preceding cycle from the pre-smoothing data of the present cycle) is multiplied by the torque constant Kt, inertia Jm of the servomotor, the constant (Jm + JL)/Kt determined by the inertia JL of the machine coupled to the servomotor, and a velocity feedforward coefficient $\beta$, to thereby obtain a velocity feedforward quantity FFv. That is, the calculation by equation (6) below is performed to obtain the velocity feedforward quantity FFv.

$$FFv = \{\beta(Jm + JL)/Kt\}\{(1 - Z^{-1})/Ts\}\ SMD$$
$$= \{\beta'(Jm + JL)/Kt\}(SMD0 - SMD1) \qquad ...(6)$$

This feedforward quantity FFv is added to the torque command Tc1 obtained by the aforementioned velocity loop processing, thereby acquiring a torque command Tc by which the velocity feedforward control has been effected, and the servomotor is driven in accordance with the torque command Tc.

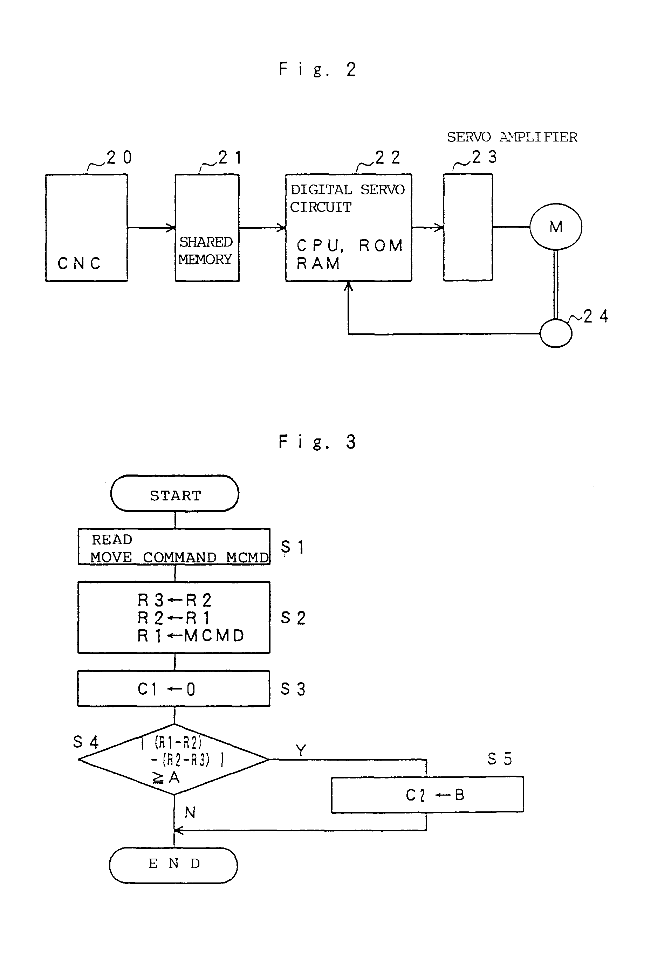

FIG. 2 is a block diagram of a servomotor control system to which the present invention is applied. The configuration of the control system is identical with that of a conventional digital servo control system, and so it is just schematically illustrated.

In FIG. 2, reference numeral 20 denotes a computerized numerical control (CNC) device, 21 a shared RAM, 22 a digital servo circuit including a CPU, a ROM, a RAM, etc., 23 a servo amplifier comprising a transistor inverter or the like, M a servomotor, and 24 a pulse coder for generating a pulse as the servomotor M rotates. FIG. 2 illustrates only one single-shaft servomotor.

The CNC device 20 writes the move command Mcmd in the shared RAM 21 in each ITP cycle (distribution cycle), and the CPU of the digital servo circuit 22 reads the move command Mcmd from the shared RAM 21 to execute the position and velocity loop processings in each of the cycles Ts obtained by dividing the ITP cycle by N (ITP cycle = Ts × N). The move command for the individual position and velocity loop processings Ts is obtained in such a manner that the move command Mcmd, output from the CNC device 20 in each ITP cycle, is distributed uniformly over the ITP period (DDA processing); the position loop processing is executed in accordance with the difference between the move command and a current position of the servomotor M, obtained based on the feedback pulses from the pulse coder 24; and the velocity command is acquired by carrying out a position feedforward control processing, which will be described later. Subsequently, the velocity loop processing and is executed in accordance with an actual speed of the servomotor M, which is obtained based on the velocity command and the feedback pulses from the pulse coder 24, are carried out to obtain a torque command (electric current command). A current loop processing is then executed to generate a PWM command, in accordance with which the servomotor M is driven through the servo amplifier 23.

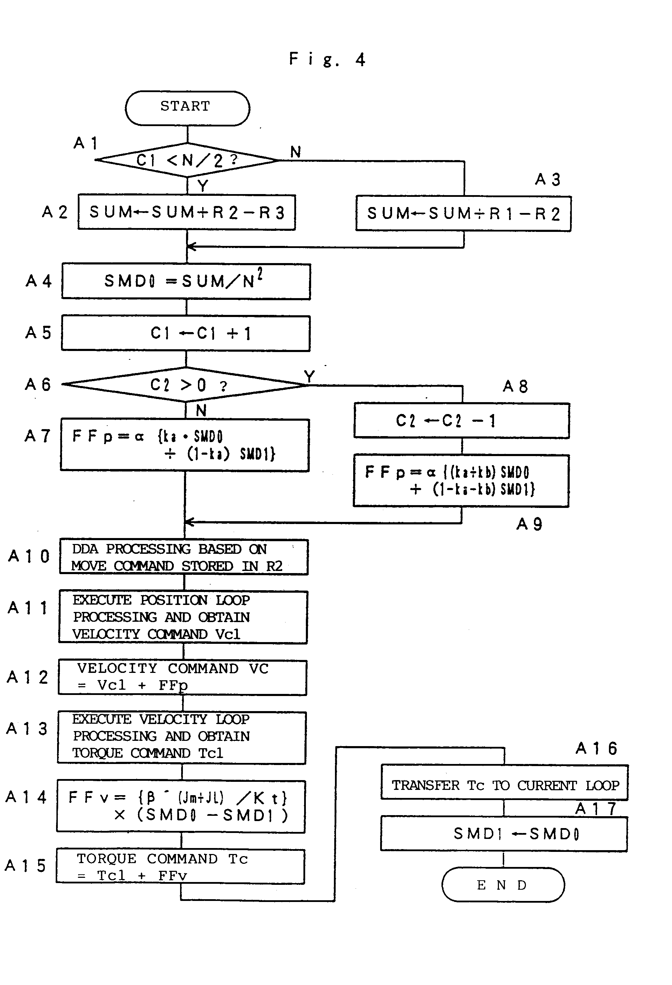

Referring now to FIG. 3, a processing executed by the CPU of the digital servo circuit 22 in each ITP cycle will be described.

First, in Step S1, the CPU of the digital servo circuit 22 reads the move command Mcmd distributed from the CNC device 20 and the same stored in the shared memory 21, and then in Step S2, stores the value of a register R2 in register R3, the value of register R1 in register R2 and the move command Mcmd read in step 1 into register R1, respectively.

As described later, normal position and velocity loop processings are executed based on the value of the move command Mcmd stored in the register R2, and so reading of the move command Mcmd is advanced by one cycle. The register R1 stores a later (future) move command Mcmd advanced in time by one ITP cycle from the move command Mcmd with which the position-velocity loop processing is executed; the register R2 stores the move command Mcmd for the present position-velocity loop processing cycle; and the register R3 stores an earlier (past) move command Mcmd delayed in time by one ITP cycle. At first, "0" is stored in the registers R1, R2 and R3 by initialization.

In Step S3, the value of a counter C1, which represents an index of the position-velocity loop processing cycle, is set to "0".

Then in Step S4, first, the value stored in the register R2 is subtracted from the value stored in the register R1, to obtain the difference between the move command Mcmd for the present ITP cycle and the move command Mcmd for the (future) ITP cycle immediately following the present cycle. This difference indicates the acceleration from the present cycle to the subsequent cycle. Specifically, the move command distributed in each ITP cycle is a move command assigned to a predetermined time period (ITP cycle) and thus represents velocity; therefore, the difference in move command (velocity) between the present and subsequent cycles represents acceleration. Similarly, the value stored in the register R3 is subtracted from the value stored in the register R2 to obtain the acceleration from the (past) ITP cycle immediately preceding the present ITP cycle to the present ITP cycle. Then, it is determined whether the absolute value of the difference between the two accelerations thus obtained, i.e., $|(R1 - R2) - (R2 - R3)|$, is a value greater than or equal to the set threshold A.

If the absolute value of the difference between the two accelerations is greater than or equal to the threshold A, a set value B is stored in a counter C2, and the processing for the present ITP cycle is ended. On the other hand, if the absolute value of the difference is smaller than the threshold A, the processing is ended without setting the counter C2. That is, the value B is set in the counter C2 only when the change in acceleration is greater than or equal to the threshold A. The above-described processing is executed thereafter in each ITP cycle. The value B is set to a positive integer corresponding to a time lag (usually, about 20 to 30 msec) by which the servo system is delayed with respect to acceleration change.

Referring now to the flowchart of FIG. 4, a processing executed by the CPU of the digital servo circuit 22 in each position-velocity loop processing cycle Ts will be described.

In Step A1, the CPU of the digital servo circuit 22 determines whether the value of the counter C1 is smaller than 1/2 of divisor N (= ITP cycle/position-velocity loop processing cycle). If the value of the counter C1 is smaller than N/2, the value obtained by subtracting the value of the register R3 from the value of the register R2 is added to the value of an accumulator SUM, in Step A2; if the value of the counter C1 is greater than or equal to N/2, the value obtained by subtracting the value of the register R2 from the value of the register R1 is added to the value of the accumulator SUM, in Step A3. The program then proceeds to Step A4. The accumulator SUM is set to "0" by initialization.

In Step A4, the value of the accumulator SUM is divided by the square of the divisor N to obtain pre-smoothing data SDM0. Then, the counter C1 is incremented (Step A5). Steps A1 to A5 constitute a processing for obtaining the pre-smoothing data SDM0.

In the pre-smoothing processing based on the aforesaid equation (1), the pre-smoothing data SDM0 is acquired using the move command for each position-velocity loop (the move command obtained after the DDA processing). This processing is rather complicated; however, the pre-smoothing processing of Steps A1-A5 permits the pre-smoothing data to be obtained from the move command Mcmd for each distribution cycle by a relatively simple procedure. The pre-smoothing data obtained according to equation (1) and the pre-smoothing data obtained by Steps A1-A5 are substantially identical, as described later.

The processing for obtaining pre-smoothing data according to equation (1) is explained in detail in aforementioned PCT/JP91/01537 and PCT/JP92/01150.

Subsequently, in Step A6, it is determined whether or not the value of the counter C2 is positive. If the value of the counter C2 is not positive (that is, if the counter value is "0"), the program proceeds to Step A7, wherein the calculation by the aforementioned equation (4) is performed based on the smoothing data SMD0 obtained in the present position-velocity loop processing cycle and the smoothing data SMD1 of the preceding cycle, stored in the register, to obtain a position feedforward quantity FFp.

In the case where the value B has been set in the counter C2 in the aforesaid Step S5 and the current value of the counter C2 is positive, "1" is subtracted from the value of the counter C2 in Step A8, and the calculation by equation (5) is performed to obtain a position feedforward quantity FFp in Step A9.

The program then proceeds to Step A10, wherein the DDA processing is carried out based on the move command Mcmd stored in the register R2 to obtain a move command for the position-velocity loop processing cycle.

During the first ITP cycle after the start of the processing, the register R2 stores no move command Mcmd, and so, the move command for the position-velocity loops during that period is "0". That is, the smoothing processing and the feedforward processing are executed in advance by one ITP cycle. This means that the feedforward processing is advanced by one ITP cycle with respect to the position-velocity loop processing.

Based on the move command for the position-velocity loop processing cycle, obtained in Step A10, and the position feedback quantity from the pulse coder 24, the velocity command Vc1 is obtained by a position

7

loop processing similar to conventional one (Step A11), and the position feedforward quantity FFp, obtained in Step A7 or A9, is added to the velocity command Vc1 to obtain a velocity command Vc which has been subjected to the position feedforward processing (Step A12). Using the velocity command Vc and the velocity feedback signal, a velocity loop processing similar to conventional one is carried out to obtain a torque command Tc1 (Step A13).

Then, the calculation by equation (6) is performed, using the smoothing data SMD0 obtained in the present cycle and the smoothing data SMD1 of the preceding cycle stored in the register, to obtain a velocity feedforward quantity FFv (Step A14). The velocity feedforward quantity FFv is added to the torque command Tc1 obtained in Step A10 to acquire a torque command Tc which has been subjected to the velocity feedforward control (Step A15), and the torque command Tc thus obtained is transferred to the current loop (Step A16). The smoothing data SMD0 obtained in the present cycle is then stored in the register so that it can be used in the subsequent cycle as the smoothing data SMD1 of the preceding cycle Ts (Step A17), and the processing for the present position-velocity loop is ended. The CPU thereafter executes the processing of FIG. 4 in each position-velocity loop processing cycle Ts.

In the foregoing embodiment, the velocity feedforward control is executed, but it may be omitted.

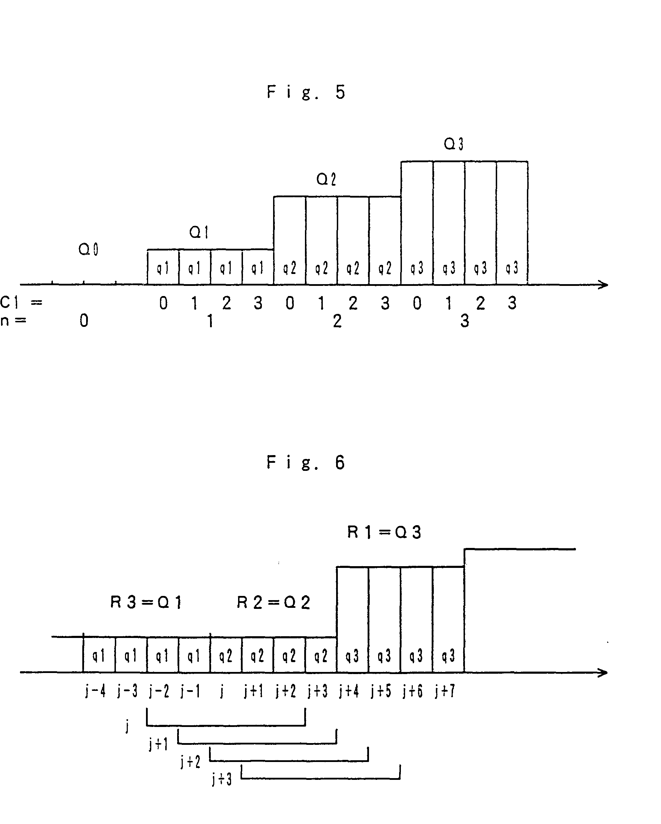

Referring to Fig. 5, the explanation will be made for that the above-described processing is substantially identical with the processing by equation (1), as the methods for obtaining the pre-smoothing data.

The following explanation is based on the assumption that one ITP cycle includes four position-velocity loop cycles, i.e., $N = 4$, and that the lead quantity d in equation (1) is "2". It is further assumed that the move command Mcmd for the nth ITP cycle is Qn; $Qn = 0$ where $n \leq 0$, and that move commands Q1, Q2, ..., Qn, ... are distributed where $n \geq 1$. Furthermore, the move commands for the position-velocity loops, which are respectively fourths of the move commands Q1, Q2 and Q3 of the individual ITP cycles, are represented by $q_1$, $q_2$ and $q_3$. The move commands for the position-velocity loops are adjusted in the DDA processing so that equal move commands are assigned to the individual cycles; therefore, $Qn/N = Qn/4 = qn$. Consequently, in Steps A1 to A5, the counter C1, the accumulator SUM, and the pre-smoothing data SMD0 take values as shown in Table 1 below.

TABLE 1

| n | Mcmd | C1 | SUM | SMD0 |
|---|---|---|---|---|
| 0 | $Q_0$ | 0 | $0+Q_0-Q_{-1}=0$ | $0/4^2=0$ |
|  |  | 1 | $0+Q_0-Q_{-1}=0$ | $0/4^2=0$ |
|  |  | 2 | $0+Q_1-Q_0=Q_1$ | $4q_1/4^2=q_1/4$ |
|  |  | 3 | $Q_1+Q_1-Q_0=2Q_1$ | $2\times 4q_1/4^2=2q_1/4$ |
| 1 | $Q_1$ | 0 | $2Q_1+Q_1-Q_0=3Q_1$ | $3\times 4q_1/4^2=3q_1/4$ |
|  |  | 1 | $3Q_1+Q_1-Q_0=4Q_1$ | $4\times 4q_1/4^2=q_1$ |
|  |  | 2 | $4Q_1+Q_2-Q_1=3Q_1+Q_2$ | $(3q_1+q_2)/4$ |
|  |  | 3 | $3Q_1+Q_2+Q_2-Q_1=2Q_1+2Q_2$ | $(2q_1+2q_2)/4$ |
| 2 | $Q_2$ | 0 | $2Q_1+2Q_2+Q_2-Q_1=Q_1+3Q_2$ | $(q_1+3q_2)/4$ |
|  |  | 1 | $Q_1+3Q_2+Q_2-Q_1=4Q_2$ | $q_2$ |
|  |  | 2 | $4Q_2+Q_3-Q_2=3Q_2+Q_3$ | $(3q_2+q_3)/4$ |
|  |  | 3 | $3Q_2+Q_3+Q_3-Q_2=2Q_2+2Q_3$ | $(2q_2+2q_3)/4$ |
| 3 | $Q_3$ | 0 | $2Q_2+2Q_3+Q_3-Q_2=Q_2+3Q_3$ | $(q_2+3q_3)/4$ |
|  |  | 1 | $Q_2+3Q_3+Q_3-Q_2=4Q_3$ | $q_3$ |
|  |  | 2 | $4Q_3+Q_4-Q_3=3Q_3+Q_4$ | $(3q_3+q_4)/4$ |
|  |  | 3 | $3Q_3+Q_4+Q_4-Q_3=2Q_3+2Q_4$ | $(2q_3+2q_4)/4$ |
|  |  |  | . . . | . . . |
| n | $Q_n$ | 0 | $Q_{n-1}+3Q_n$ | $(q_{n-1}+3q_n)/4$ |
|  |  | 1 | $4Q_n$ | $q_n$ |
|  |  | 2 | $3Q_n+Q_{n+1}$ | $(3q_n+q_{n+1})/4$ |
|  |  | 3 | $2Q_n+2Q_{n+1}$ | $(2q_n+2q_{n+1})/4$ |

As seen from Table 1, the pre-smoothing data SMD for the nth ITP cycle is given as follows:
In the first position-velocity loop cycle,

$(q_{n-1} + 3q_n)/4$

in the second position-velocity loop cycle,

$q_n$

in the third position-velocity loop cycle,

$(3q_n + q_{n+1})/4$

and in the fourth position-velocity loop cycle,

$(2q_n + 2q_{n+1})/4$

This means that the pre-smoothing data SMD is obtained by adding together the move command for the present position-velocity loop cycle, the move command for the immediately preceding (past) cycle, the move command for the immediately succeeding (later) cycle, and the move command for the cycle which is two cycles later than the present cycle, and dividing the obtained sum by "4".

On the other hand, the pre-smoothing data SMD obtained by equation (1) can be expressed by the following equation (7):

$$
\begin{aligned}
\text{SMD} &= Z^2(1 + Z^{-1} + Z^{-2} + Z^{-3})q_j/4 \\
&= (Z^2 + Z^1 + 1 + Z^{-1})q_j/4 \\
&= \{q(j+2) + q(j+1) + q(j) + q(j-1)\}/4 \quad \ldots(7)
\end{aligned}
$$

In equation (7), q(j) represents the move command for the jth position-velocity loop cycle. As seen from equation (7), the pre-smoothing data SMD is obtained by adding together the move command q(j) for the present jth position-velocity loop cycle, the move command q(j-1) for the immediately preceding (past) cycle, the move command q(j+1) for the immediately succeeding (later) cycle, and the move command q-(j+2) for the cycle which is two cycles later than the present cycle, and dividing the sum by "4". Thus, the pre-smoothing data SMD obtained according to equation (7) is identical to the pre-smoothing data SMD obtained in Steps A1 to A5.

Now, the position feedforward quantity FFp will be expressed using equation (7). From equation (7), the pre-smoothing data SDM0 for the jth position-velocity loop cycle is

SMD0 = {q(j+2) + q(j+1) + q(j) + q(j-1)}/4     (8)

The pre-smoothing data SDM1 for the (j-1)th cycle which is one cycle earlier than the jth cycle is given by the following equation (9).

SMD1 = {q(j+1) + q(j) + q(j-1) + q(j-2)}/4     (9)

Accordingly, the position feedforward quantity FFp is given as follows:

$$
\begin{aligned}
\text{FFp} &= \alpha\{k \cdot \text{SMD0} + (1 - k)\text{SMD1}\} \\
&= (\alpha/4)[k\{q(j+2) + q(j+1) + q(j) + q(j-1)\} + \\
&\quad (1 - k)\{q(j+1) + q(j) + q(j-1) + q(j-2)\}] \\
&= (\alpha/4)[\{q(j+1) + q(j) + q(j-1) + q(j-2)\} + \\
&\quad k\{q(j+2) - q(j-2)\}] \quad\quad\quad \ldots(10)
\end{aligned}
$$

Provided that the jth position-velocity loop cycle is a cycle immediately after a changeover of ITP cycles as shown in FIG. 6, the register R1 stores the move command Q3 for the immediately succeeding (later) ITP cycle, the register R2 stores the move command Q2 for the ITP cycle corresponding to the present position-velocity loop, and the register R3 stores the move command Q1 for the immediately preceding (past) ITP cycle. In the illustrated example, Q1 = Q2 and $q_1 = q_2$.

From equation (10), the feedforward quantity FFp for the jth position-velocity loop cycle is

$$FFp = (\alpha/4)\{q_2 + q_2 + q_1 + q_1 + k(q_2 - q_1)\}$$
$$= \alpha \cdot q_2 \qquad \qquad ...(11)$$

Similarly, for the (j + 1)th position-velocity loop cycle,

$$FFp = (\alpha/4)\{q_2 + q_2 + q_2 + q_1 + k(q_2 - q_1)\}$$
$$= \alpha \cdot q_2;$$

for the (j + 2)th position-velocity loop cycle,

$$FFp = (\alpha/4)\{q_2 + q_2 + q_2 + q_2 + k(q_3 - q_2)\}$$
$$= (\alpha/4)\{4q_2 + k(q_3 - q_2)\};$$

and for the (j + 3)th position-velocity loop cycle,

$$FFp = (\alpha/4)\{q_3 + q_2 + q_2 + q_2 + k(q_3 - q_2)\}$$
$$= (\alpha/4)\{q_3 + 3q_2 + k(q_3 - q_2)\}$$

When the move command Q3 is small relative to Q1 = Q2, and a change of acceleration as commanded is smaller than the threshold A, the above-mentioned value k equals ka. When the acceleration change is greater than or equal to the threshold A, k = ka + kb, and the feedforward quantity FFp remains the same during the jth and (j + 1)th cycles but changes during the (j + 2)th and (j + 3)th cycles, depending on whether the acceleration change as commanded is large or small. Specifically, a change of $kb(q_3 - q_2)$ occurs in the feedforward quantity FFp during the (j + 2)th and (j + 3)th cycles, depending on whether the acceleration change as commanded is large or small. This means that, when the move command Q3 for the immediately following (later) cycle is large and thus the degree of acceleration is large, the feedforward quantity is increased by $kb(q_3 - q_2)$, as compared with the case where the acceleration change is small, and, when the degree of deceleration is large, the feedforward quantity is decreased by $|kb(q_3 - q_2)|$. That is, execution of the feedforward control is advanced in terms of time.

The feedforward quantity FFp can alternatively be obtained according to the following equation (13). In this case, the feedforward quantity FFp is obtained on condition that k = ka where the acceleration change as commanded is smaller than a threshold T, or condition that k = ka - kc where the acceleration change is greater than or equal to the threshold T. Also, in this case, substantially the same operation and effect as achieved in the aforementioned embodiment can be obtained.

$$FFp = \alpha\{(1 - k) \cdot SMD0 + k \cdot SMD1\} \qquad (13)$$

In the cases where the number N of position-velocity loop processing cycles within one ITP cycle is an even number, such as "4" or "8", the value d is set to "1" or "2" when N = 4, and is set to "3" or "4" when N = 8, so that an average of the pre-smoothing data SMD associated with position-velocity loop processing cycles around the present cycle cannot be obtained. As a result, the pre-smoothing data SMD is delayed or advanced timewise. To avoid this, the feedforward quantity may be obtained by first obtaining advanced pre-smoothing data (for example, with the value d set to "2" when N = 4) to determine a weighted average of the advanced pre-smoothing data and the pre-smoothing data obtained in the preceding position-velocity loop cycle, thereby obtaining pre-smoothing data, equivalently free from time lag or time advance as disclosed in PCT/JP92/01150.

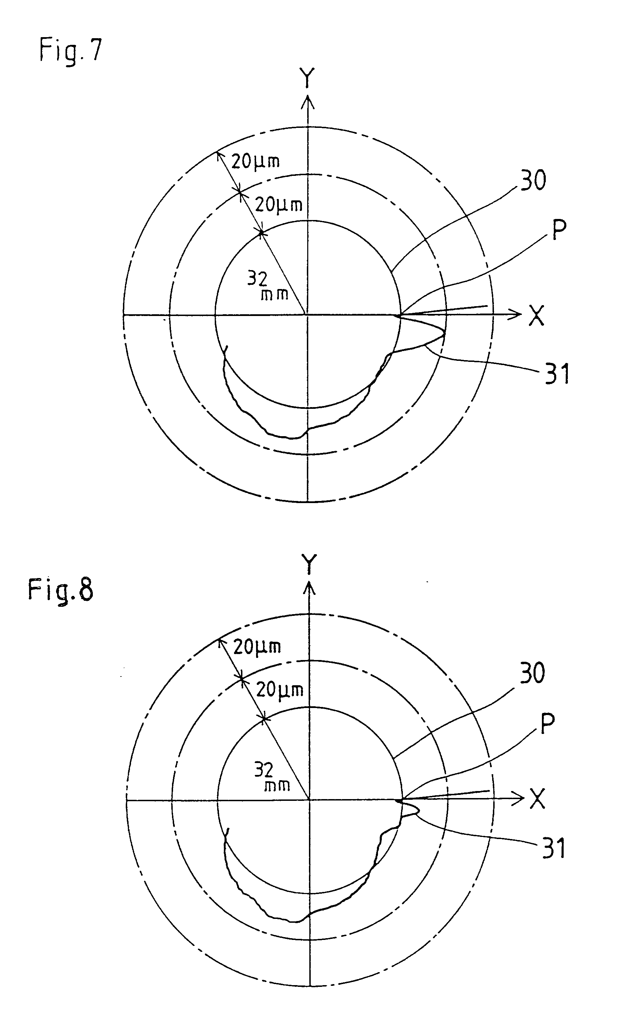

FIGS. 7 and 8 illustrate the results of the experiments conducted in order to examine the advantageous effects of the present invention. In the figures are plotted cutting paths observed when a straight cutting command is first given to carry out straight-line cutting up to point P along the Y axis at a fixed speed, and then a circular cutting command 30 is given at point P to make a circular cut with a radius of 32 mm. The illustrated paths are exaggerated in the radial direction of the actually commanded circle in order to expressly show errors of actual paths. For this reason, the straight portions of the paths 31 are not illustrated parallel with the Y axis.

FIG. 7 illustrates the result of the experiment conducted according to conventional feedforward control, wherein the feedforward command was not advanced in terms of time when a change of acceleration as commanded was large, and the feedforward quantity was obtained without regard to the acceleration change, unlike the present invention. FIG. 8 illustrates the result of the experiment according to the present invention. After the command is changed to the circular cutting command at point P, the velocity in the X-axis direction sinusoidally increases from "0", while the velocity in the Y-axis direction sinusoidally decreases from the original velocity (command velocity). That is, the command-based acceleration is subjected to rapid change at point P. Comparison between the actual paths of FIGS. 7 and 8 at point P where the acceleration changes largely indicates that error of the actual path with respect to the command is smaller in the case of the present invention (FIG. 8), showing its improving effect.

As described above, according to the present invention, when the acceleration change as commanded by the move commend for an ITP cycle, in which position and velocity loop processings are executed, is large, computation of the feedforward quantity is advanced in terms of time. Accordingly, the feedforward quantity is increased in positive or negative direction in accordance with the commanded acceleration change, and the torque command obtained by the position and velocity loop processings is increased in positive or negative direction, thus compensating for a follow-up delay of the servo system. Consequently, position error can be reduced even when the travel path of a machine tool or robot driven by a servomotor undergoes large changes.

**Claims**

1. A servomotor control method comprising the steps of:

   (a) obtaining a velocity command by carrying out a position loop processing based on a move command distributed from a numerical control device in each distribution cycle and a position feedback quantity;

   (b) detecting the magnitude of a commanded acceleration change based on the quantity of change of move commands associated, respectively, with a present distribution cycle and distribution cycles before and after the present distribution cycle;

   (c) determining whether the magnitude of commanded acceleration change detected in said step (b) is greater than or equal to a predetermined threshold;

   (d) calculating a position feedforward quantity based on the move commands for the present distribution cycle and the distribution cycles before and after the present distribution cycle, said step (d) including advancing the calculation of the position feedforward quantity by a predetermined time period from a time at which the position feedforward quantity is calculated in the case where the magnitude of commanded acceleration change is smaller than the predetermined threshold, when the magnitude of commanded acceleration change is found to be greater than or equal to the predetermined threshold in said step (c); and

   (e) adding the position feedforward quantity calculated in said step (d) to the velocity command obtained in said step (a) to thereby correct the velocity command.

2. The servomotor control method according to claim 1, wherein said step (d) further includes the steps of:

   (d1) obtaining smoothing data for each position loop processing cycle by carrying out a pre-smoothing processing;

   (d2) obtaining a position feedforward quantity FFp according to the equation

   $$FFp = \alpha\{k \cdot SMD0 + (1 - k)SMD1\}$$

   where SMD0 represents the smoothing data of a present position loop processing cycle obtained in said step (d1), SMD1 the smoothing data of a position loop processing cycle immediately preceding the present position loop processing cycle, $\alpha$ a feedforward coefficient, and k a parameter; and (d3) setting the value of the parameter k to k1 when the magnitude of acceleration change is smaller than the predetermined threshold, and to k2, which is greater than k1 by a predetermined time period, when the magnitude of acceleration change is greater than or equal to the predetermined threshold.

3. The servomotor control method according to claim 2, which further comprises the steps of:
(f) obtaining a torque command by carrying out a velocity loop processing based on the velocity command and a velocity feedback quantity;
(g) calculating a velocity feedforward quantity based on a value obtained by differentiating the smoothing data obtained in said step (d1); and
(h) adding the velocity feedforward quantity calculated in said step (g) to the torque command obtained in said step (f) to thereby correct the torque command.

4. The servomotor control method according to claim 1, wherein said step (d) further includes the steps of:
(d4) obtaining smoothing data for each position loop processing cycle by carrying out a pre-smoothing processing;
(d5) obtaining a position feedforward quantity FFp according to the equation

$$FFp = \alpha\{(1 - k) \cdot SMD0 + k \cdot SMD1\}$$

where SMD0 represents the smoothing data of a present position loop processing cycle obtained in said step (d4), SMD1 the smoothing data of a position loop processing cycle immediately preceding the present position loop processing cycle, $\alpha$ a feedforward coefficient, and k a parameter; and
(d6) setting the value of the parameter k to k1 when the magnitude of acceleration change is smaller than the predetermined threshold, and to k3, which is smaller than k1 by a predetermined time period, when the magnitude of acceleration change is greater than or equal to the predetermined threshold.

5. The servomotor control method according to claim 4, which further comprises the steps of:
(f) obtaining a torque command by carrying out a velocity loop processing based on the velocity command and a velocity feedback quantity;
(g) calculating a velocity feedforward quantity based on a value obtained by differentiating the smoothing data obtained in said step (d4); and
(h) adding the velocity feedforward quantity calculated in said step (g) to the torque command obtained in said step (f) to thereby correct the torque command.

Fig. 1

PRE-SMOOTHING 7

SMD

$\dfrac{\beta \ (Jm+Jl)}{Kt} \cdot \dfrac{1-Z^{-1}}{Ts}$  9

8

$\alpha \ \{k+(1-k)\ Z^{-1}\}$

FFp

$\dfrac{1}{Jl\ S}$  11

$\dfrac{1}{S}$  12

MACHINE POSITION

$\dfrac{Km}{S}+Cm$  10

FFv

DDA 1

$\Sigma$ 2

$Kp$ 3

$\dfrac{k1}{S}+k2$  4

$Kt$ 5

$\dfrac{1}{Jm\ S}$  6

Vc

Tc

VELOCITY

MCMD

EP 0 596 141 A1

Fig. 2

SERVO AMPLIFIER

~20 ~21 ~22 ~23

CNC → SHARED MEMORY → DIGITAL SERVO CIRCUIT

CPU, ROM RAM

→ M

~24

Fig. 3

START

READ MOVE COMMAND MCMD    S1

R3←R2
R2←R1
R1←MCMD    S2

C1←0    S3

S4    $|(R1-R2) - (R2-R3)| \geqq A$    Y    S5

C2←B

N

END

Fig. 4

START

A1  C1 < N/2 ?

A2  SUM ← SUM + R2 − R3

A3  SUM ← SUM ÷ R1 − R2

A4  $SMD0 = SUM / N^2$

A5  C1 ← C1 + 1

A6  C2 > 0 ?

A8  C2 ← C2 − 1

A7  FFp = α {ka · SMD0 ÷ (1−ka) SMD1}

A9  FFp = α {(ka÷kb) SMD0 ÷ (1−ka−kb) SMD1}

A10  DDA PROCESSING BASED ON MOVE COMMAND STORED IN R2

A11  EXECUTE POSITION LOOP PROCESSING AND OBTAIN VELOCITY COMMAND Vc1

A12  VELOCITY COMMAND VC = Vc1 + FFp

A13  EXECUTE VELOCITY LOOP PROCESSING AND OBTAIN TORQUE COMMAND Tc1

A14  FFv = {β ´ (Jm÷JL) / Kt} × (SMD0 − SMD1)

A15  TORQUE COMMAND Tc = Tc1 + FFv

A16  TRANSFER Tc TO CURRENT LOOP

A17  SMD1 ← SMD0

END

Fig. 5

Fig. 6

Fig. 7

Fig. 8

| | International application No. |
|---|---|
| | PCT/JP93/00618 |

**A. CLASSIFICATION OF SUBJECT MATTER**

Int. Cl$^5$ G05D3/12

According to International Patent Classification (IPC) or to both national classification and IPC

**B. FIELDS SEARCHED**

Minimum documentation searched (classification system followed by classification symbols)

Int. Cl$^5$ G05D3/12

Documentation searched other than minimum documentation to the extent that such documents are included in the fields searched

| Jitsuyo Shinan Koho | 1971 - 1992 |
|---|---|
| Kokai Jitsuyo Shinan Koho | 1973 - 1992 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, A, 4-64898 (Mitsubishi Heavy Industries, Ltd.), February 28, 1992 (28. 02. 92), (Family: none) | 1-5 |
| A | JP, A, 3-15911 (Fanuc Ltd.), January 24, 1991 (24. 01. 91), & WO, A1, 90-11562 & EP, A1, 417312 & US, A, 5107193 | 1-5 |
| A | JP, A, 1-292405 (Hitachi, Ltd.), November 24, 1989 (24. 11. 89), (Family: none) | 1-5 |
| A | JP, A, 63-157209 (Mitsubishi Heavy Industries, Ltd.), June 30, 1988 (30. 06. 88), (Family: none) | 1-5 |

| X | Further documents are listed in the continuation of Box C. | | See patent family annex. |
|---|---|---|---|

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| July 28, 1993 (28. 07. 93) | August 17, 1993 (17. 08. 93) |

| Name and mailing address of the ISA/ | Authorized officer |
|---|---|
| Japanese Patent Office | |
| Facsimile No. | Telephone No. |

Form PCT/ISA/210 (second sheet) (July 1992)